# EUROPEAN PATENT SPECIFICATION

(11) **EP 2 682 812 B1**
(45) Date of publication and mention of the grant of the patent: **04.03.2015**
(21) Application number: 13151834.2
(22) Date of filing: 18.01.2013
(51) Int. Cl.: G02F 1/29, G02B 3/12, G02B 3/00, G02B 3/14, H04N 13/04, G02B 27/22

(54) **Liquid crystal optical element and image display apparatus**
Flüssigkristall-Optikelement und Bildanzeigevorrichtung
Élément optique à cristaux liquides et dispositif d'affichage d'image

(30) Priority: 06.07.2012 JP 2012152775
(43) Date of publication of application: 08.01.2014
(73) Proprietor: Kabushiki Kaisha Toshiba, Tokyo 105-8001 (JP)
(72) Inventor: Momonoi, Yoshiharu, Tokyo 105-8001 (JP); Takagi, Ayako, Tokyo 105-8001 (JP); Uehara, Shinichi, Tokyo 105-8001 (JP); Kashiwagi, Masako, Tokyo 105-8001 (JP)
(74) Representative: Hoffmann Eitle

(56) References cited:
- US-A1- 2011 096 252
- US-A1- 2012 162 592

## Description

### FIELD

The embodiment described herein relates generally to a liquid crystal optical element and an image display apparatus.

### BACKGROUND

A liquid crystal optical element is known, which uses the birefringence of liquid crystal molecules to change the distribution of refractive index in accordance with the application of voltage. Furthermore, there is a stereoscopic image display apparatus obtained by combining such a liquid crystal optical element and an image display unit.

In such a stereoscopic image display apparatus, the state in which an image displayed on the image display unit enters the eyes of a viewer as it is, and the state in which the image displayed on the image display unit enters the eyes of the viewer as a plurality of parallax images are switched by changing the refractive index distribution of the liquid crystal optical element. In this manner, a two-dimensional image display operation and a three-dimensional image display operation can be performed. A technique of changing a light path using an optical principle of Fresnel zone plate is also known. There is a demand for such a display apparatus with a high display quality.

Hee-Jin (US201110096252 A1) discloses a liquid crystal lens which is electrically driven and a stereoscopic display device using the same in which a thickness of a liquid crystal layer provided to the liquid crystal lens which is electrically driven is reduced in a manner of anisotropically applying Fresnel lenses within a pitch,

Ayako Takagi et al. (US 2012/162592 A1) discloses a gradient refractive index liquid crystal optical apparatus and image display apparatus comprising a first substrate having a first face; a second substrate having a second face opposed to the first face of the first substrate; a liquid crystal layer sandwiched between the first substrate and the second substrate; a plurality of first electrodes provided on the first face of the first substrate, and arranged along a first direction; a plurality of second electrodes provided on the first face of the first substrate to correspond to the first electrodes, the plurality of second electrodes being arranged along the first direction; a plurality of third electrodes provided on the first face of the first substrate and arranged along the first direction; and a fourth electrode provided on the second face of the second substrate.

### BRIEF DESCRIPTION OF THE DRAWINGS

FIG. 1 is a cross-sectional view showing a liquid crystal optical element according to an embodiment.
FIG. 2 is a block diagram showing an image display apparatus including the liquid crystal optical element according to the embodiment.
FIG. 3 is a drawing for explaining the effect of the liquid crystal optical element according to the embodiment.
FIG. 4 is a cross-sectional view showing an example of a cross-section of a groove of the liquid crystal optical element according to the embodiment.
FIG. 5 is a cross-sectional view showing another example of the cross-section of the groove of the liquid crystal optical element according to the embodiment.

### DETAILED DESCRIPTION

A liquid crystal optical element according to an embodiment includes: a first substrate; an insulating layer provided onto a first surface of the first substrate; a pair of first electrodes being provided onto the insulating layer, both extending in a first direction, and being arranged in a second direction that is perpendicular to the first direction; a pair of second electrodes being provided between the pair of first electrodes on the first surface, both extending in the first direction, and being arranged in the second direction; a second substrate having a second surface facing the first surface of the first substrate; a counter electrode provided onto the second surface of the second substrate; and a liquid crystal layer provided between the first substrate and the second substrate, the insulating layer having a groove respectively provided directly adjacent to each region of the insulating layer immediately below one of the second electrodes, and each extending in the first direction.

Hereinafter, an embodiment will be described with reference to the accompanying drawings.

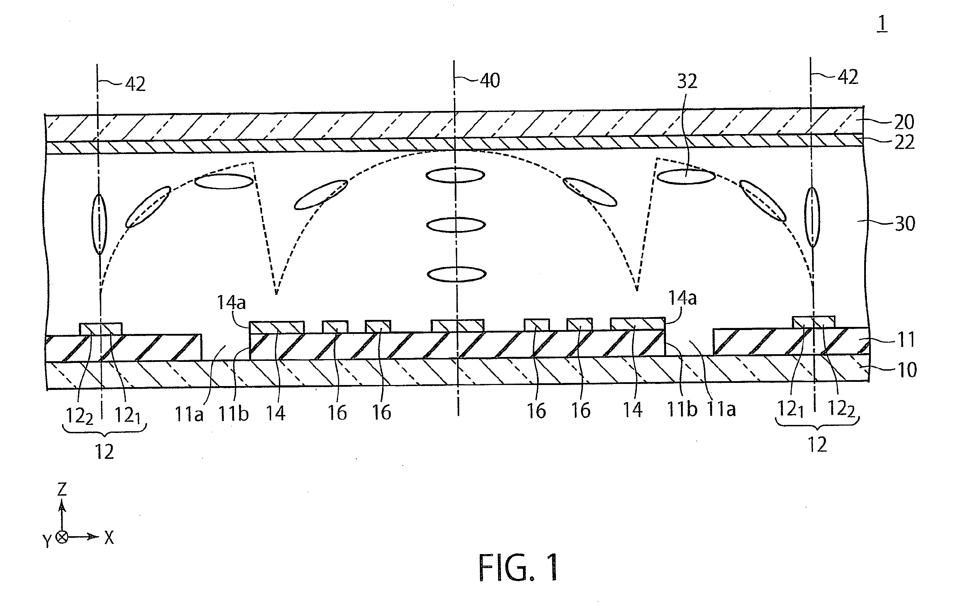

FIG. 1 shows a cross section of a liquid crystal optical element according to an embodiment, which includes a first substrate 10, a second substrate 20 arranged to face the first substrate 10, and a liquid crystal layer 30 sandwiched between the first substrate 10 and the second substrate 20, and which functions as a liquid crystal GRIN (Gradient Index) lens in which the refractive index changes in its plane.

An insulating layer 11 is provided onto a surface of the first substrate 10 facing the second substrate 20. Onto the insulating layer 11, a plurality of first electrodes 12, a plurality of second electrodes 14, a plurality of third electrodes 16, and a plurality of fourth electrodes 18 are provided. The first to the fourth electrodes 12, 14, 16, and 18 are arranged to extend in the Y direction shown in FIG. 1.

A pair of first electrodes 12, which are adjacent to each other, is arranged at positions corresponding to ends of a Fresnel lens, and serve as common electrodes for adjacent Fresnel lenses. That is, each first electrode 12 is divided into two by an lens end central axis 42, one half 12₁ serving as an lens end electrode of the corresponding Fresnel lens, and the other half 12₂ serving as a lens end electrode of a Fresnel lens adjacent to the corresponding Fresnel lens. At the central position in the X direction of the pair of first electrodes 12, a central axis corresponding to the lens center of the Fresnel lens (hereinafter also referred to as the "lens center") 40 is present. One of the fourth electrodes 18 is located on the lens center 40. That is, the fourth electrode 18 serves as a central electrode for the corresponding Fresnel lens. Generally the voltage of the central electrode 18 is set to be at a reference voltage (GND). Accordingly, the central electrode 18 is not necessarily provided.

The second electrodes 14 are provided between the pair of first electrodes 12 at positions corresponding to discontinuous points of the Fresnel lens so as to be axisymmetric relative to the lens center 40. The second electrodes 14 are also called "Fresnel electrodes."

The third electrodes 16 are arranged at positions corresponding to a lens surface of the Fresnel lens so as to be axisymmetric relative to the lens center 40. The third electrodes 16 are also called "auxiliary electrodes."

Onto a surface of the second substrate 20 facing the first substrate 10, a fifth electrode 22 is provided. The fifth electrode 22 is arranged on the entire surface of the second substrate 20 facing the first substrate 10. The fifth electrode 22 is also called "counter electrode."

In this embodiment, grooves 11a are provided near regions of the insulating layer 11 immediately below the Fresnel electrodes 14. The detailed positions and the effect of the grooves 11a will be described later. Like the Fresnel electrodes 14, the grooves 11a extend in the Y direction.

The first substrate 10, the first to the fourth electrodes 12, 14, 16, and 18, the second substrate 20, and the counter electrode 22 are permeable to light, i.e., transparent.

The first substrate 10 and the second substrate 20 are formed of a transparent material such as glass, a resin, etc. The first substrate 10 and the second substrate 20 are in a form of a plate or sheet, having a thickness of, for example, 50 micrometers (µm) or more, and 2000 µm or less. The thickness can be arbitrarily determined.

The first to the fourth electrodes 12, 14, 16, and 18 and the counter electrode 22 contain an oxide containing at least one (type of) element selected from the group consisting of, for example, In, Sn, Zn, and Ti. For example, ITO can be used to form these electrodes. For example, at least one of In₂O₃ and SnO₃ can be used. The thicknesses of these electrodes are set so that, for example, a high transmissivity can be obtained for a visible light.

The pitch of the first electrodes 12 is set so as to compatible with a desired specification (characteristics of a lens of refractive index distribution type).

The liquid crystal layer 30 contains a liquid crystal material, i.e., Nematic liquid crystal (which is in a Nematic phase at a temperature at which the liquid crystal optical element 1 is used). The liquid crystal material has a positive or negative dielectric anisotropy. In the case of the positive dielectric anisotropy, the initial alignment of the liquid crystal in the liquid crystal layer 30 (alignment in the state where no voltage is applied to the liquid crystal layer 30) is, for example, substantially horizontal alignment. In the case of the negative dielectric anisotropy, the initial alignment of the liquid crystal layer 30 is substantially vertical alignment.

Herein, with respect to the horizontal alignment, the angle between the director of liquid crystal (long axes of liquid crystal molecules 32) and the X - Y plane (pretilt angle) is 0° or more and 30° or less. With respect to the vertical alignment, for example, the pretilt angle is 60° or more and 90° or less. At least in one of the initial alignment and the alignment when a voltage is applied, the director of liquid crystal has a component parallel to the X axis.

Hereinafter, the case where the liquid crystal contained in the liquid crystal layer 30 has a positive dielectric anisotropy, and the initial alignment is a substantially horizontal alignment will be described.

In the case of substantially horizontal alignment, when a projection is performed onto the X - Y plane in the initial alignment, the director is substantially parallel to the X axis. For example, when projection is performed onto the X - Y plane, the (absolute value of the) angle between the director and the X axis direction is 15° or less. The alignment in the liquid crystal layer 30 near the first substrate 10 is antiparallel to the alignment in the liquid crystal layer 30 near the second substrate 20. That is, the initial alignment is not the splay alignment.

An alignment film (not shown in the drawings) can also be provided onto the first substrate 10. In such a case, the first to the fourth electrodes 12, 14, 16, and 18 are arranged between the alignment film and the first substrate 10. A further alignment film (not shown in the drawings) can also be provided onto the second substrate 20. In such a case, the counter electrode 22 is arranged between the further alignment film and the second substrate 20. These alignment films may be formed of, for example, a polyimide. The initial alignment of the liquid crystal layer 30 can be obtained by performing, for example, a rubbing process on the alignment films. The direction of the rubbing process performed on the alignment film provided onto the first substrate 10 is antiparallel to the direction of the rubbing process performed on the alignment film provided onto the second substrate 20. The initial alignment can also be obtained by performing a light emitting process onto the alignment films.

The alignment of the liquid crystal in the liquid crystal layer 30 is changed by applying a voltage between the first electrodes 12 and the counter electrode 22, and between the second and the third electrodes 14 and 16 and the counter electrode 22. Due to this change, a refractive index distribution is formed in the liquid crystal layer 30, thereby changing the direction along which light incident on the liquid crystal optical element 1 moves. This change in moving direction of light is mainly caused by a refractive effect.

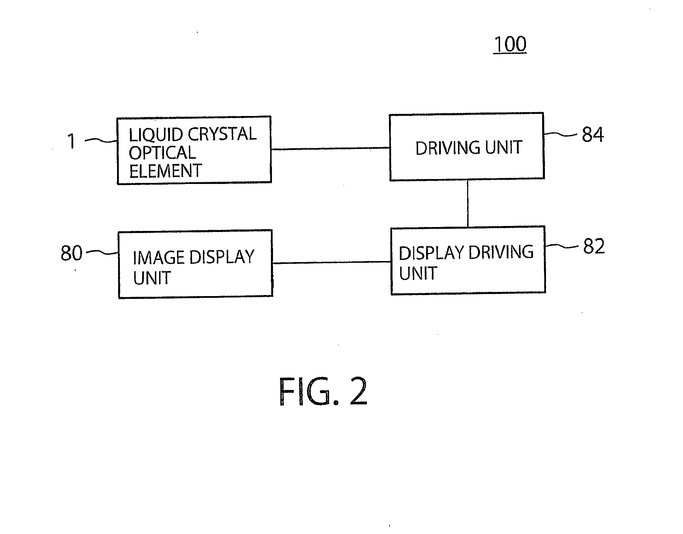

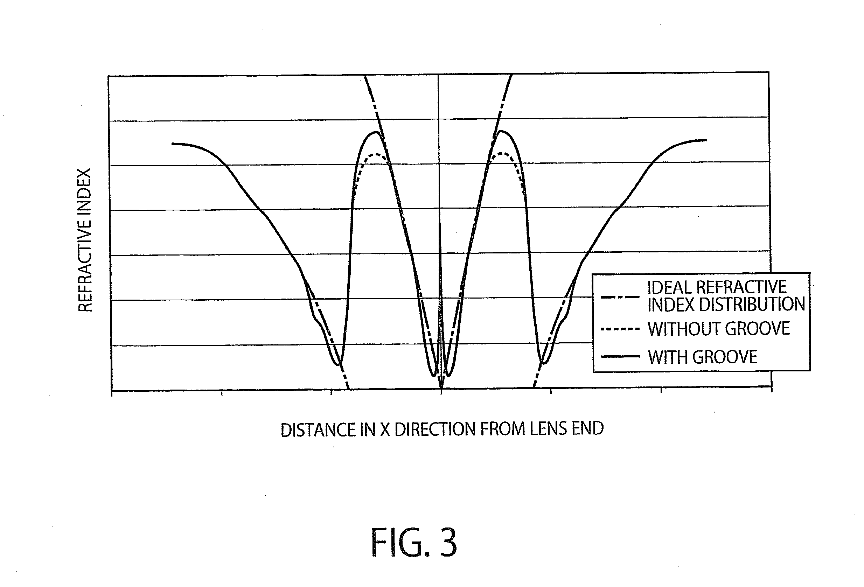

Next, the characteristics of the liquid crystal optical element 1 according to this embodiment will be described with reference to FIGs. 2 and 3. The liquid crystal optical element 1 according to this embodiment is used for an image display apparatus 100, which includes the liquid crystal optical element 1 according to this embodiment, an image display unit 80, a display driving unit 82 for driving the image display unit 80, and a driving unit 84 for driving the liquid crystal optical element 1, as shown in FIG. 2.

An arbitrarily selected display device can be used as the image display unit 80. For example, a liquid crystal display device, organic EL display device, or plasma display device can be used.

The liquid crystal optical element 1 is stacked on the image display unit 80. The first substrate 10 of the liquid crystal optical element 1 is arranged on the side of the image display unit 80, and the second substrate 20 is arranged so as to be more distant from the image display unit 80 than the first substrate 10. The image display unit 80 causes light containing image information to be incident on the liquid crystal layer 30, generates light modulated in accordance with a signal supplied form the display driving unit 82, and emits light including, for example, a plurality of parallax images. As will be described layer, the liquid crystal optical element 1 has an operation state for changing a light path and an operation state for not substantially changing a light path. When light is incident on the liquid crystal optical element 1 in the state of changing a light path, the image display apparatus 100 supplies, for example, a three-dimensional image display. Furthermore, for example, in the operation state of not substantially changing a light path, the image display apparatus 100 supplies, for example, a two-dimensional image display.

The driving unit 84 can be connected to the display driving unit 82 in either a wired or wireless manner (by an electric method or optical method). Furthermore, the image display apparatus 100 can further include a control unit (not shown in the drawings) for controlling the driving unit 84 and the display driving unit 82.

The driving unit 84 is electrically connected to the first to the fourth electrodes 12, 14, 16, and 18 and the counter electrode 22. The driving unit 84 applies a first voltage between each first electrode 12 and the counter electrode 22, applies a second voltage between each of the second and the third electrodes 14 and 16 and the counter electrode, and applies a reference voltage (GND) between each fourth electrode 18 and the counter electrode 22. For the purpose of convenience, in this specification, the state where the potentials of two electrodes are caused to be the same (i.e., the state of zero volts) is included in the case of applying a voltage.

The refractive index difference of a lens is the lowest at the lens ends. Accordingly, in many cases the first voltage to be applied to each lens end electrode 12 is set to be high. If the thickness of the lens layer becomes thinner, in order to obtain the lens performance, discontinuous points are created as in a Fresnel lens, and the function of lens can be obtained by the gradient of refractive index difference. In many cases, the voltage to be applied to each lens end electrode 12 differs from the voltage to be applied to each electrode at a discontinuous point (Fresnel electrode) 14. If the refractive index distribution from a discontinuous point to the lens center does not match the lens curve, it is possible to control the refractive index distribution by the auxiliary electrodes 16.

The first voltage and the second voltage can be either DC voltage or AC voltage. The polarities of the first voltage and the second voltage can be changed periodically, for example. For example, the potential of the counter electrode 22 can be fixed, and the potential of each first electrode 12 can be changed by an alternating current. Alternatively, the polarity of the potential of the counter electrode 22 can be periodically changed, and in accordance wit the change in polarity, the potential of each first electrode 12 can be changed in the reverse polarity, i.e., common inversion driving can be performed. In this manner, it is possible to decrease the power supply voltage of the driving circuit, thereby easing the withstand voltage specification of the driving IC.

In a case where the pretilt angle of the liquid crystal layer 30 is relatively small (for example, 10° or less), the threshold voltage Vth relating to the change in liquid crystal alignment of the liquid crystal layer 30 is relatively clear. In such a case, for example, the first voltage and the second voltage are set to be greater than the threshold voltage Vth. By applying a voltage, the liquid crystal alignment in the liquid crystal layer 30 is changed, and based on this change, a refractive index distribution is formed. The refractive index distribution is determined by the arrangement of the electrodes and the voltages to be applied to the electrodes.

Next, the effect of providing a groove 11a near a region of the insulating layer 11 immediately below each Fresnel electrode 14 as in this embodiment will be described with reference to FIG. 3. For the simplification of the explanation, a liquid crystal optical element obtained by excluding the third and the fourth electrodes from the liquid crystal optical element 1 of this embodiment will be considered as an example. A first voltage is applied to each first electrode 12 of the liquid crystal optical element of this example, a second voltage is applied to each second electrode 14, and a reference voltage (GND) is applied to the counter electrode 22. FIG. 3 shows, by the solid line, the refractive index distribution of the liquid crystal layer 30 in this state, in which the point of origin is the lens end central axis 42 of the liquid crystal optical element, the distance in the X direction from the lens end central axis 42 is on the horizontal axis, and the refractive index is on the vertical axis. An ideal refractive index distribution of the liquid crystal layer 30 is shown by the alternate long and short dash line in FIG. 3, and a refractive index distribution of the liquid crystal layer of the liquid crystal optical element in a comparative example is shown by a broken line. This comparative example has the same structure as the liquid crystal optical element of the above example except that there is no groove 11a in the insulating layer 11.

As can be understood from FIG. 3, the potential difference changes from the lens end toward the lens center, and a discontinuous point is created in the refractive index distribution by the Fresnel electrode 14. As can be understood from the comparative example shown in FIG. 3, the peak of the refractive index distribution at a discontinuous point is often gently sloping. With such a distribution, it is not possible to obtain a desired ideal lens characteristic. In order to solve this, in this embodiment, the grooves 11a are formed in part of the insulating layer 11 as shown in FIG. 1 to create a refractive index difference between the material of the insulating layer, which is an isotropic material, and the material of the liquid crystal, which is an anisotropic material, thereby correcting the refractive index distribution (the phase difference distribution) of the peak of discontinuous point, etc.

In more detail, the liquid crystal material is filled in each groove 11a of the insulating layer 11, so that the inside of each groove 11a has an optical characteristic of the liquid crystal material, which is anisotropic. When no voltage is applied, the liquid crystal material is in a lying state, in which generally the refractive index is higher than that of the isotropic material of the insulating layer. The liquid crystal material in the grooves where voltage is hardly applied causes a refractive index difference with an isotropic material of the insulating layer. By shaping each groove 11a in accordance with the shape of the peak of a sharp Fresnel lens, which is difficult to reproduce with a liquid crystal material, it is possible to improve the lens characteristic.

A side surface 11b of each groove 11a, which is on the side of the lens center 40, and extends along the Y direction, is located at substantially the same position in the X direction as a side surface 14a of the corresponding Fresnel electrode 14, which is on the side opposite to the lens center 40 and extends along the Y direction. That is, when the groove 11a is projected onto the first substrate 10 from the Z direction, the side surface 11b is located substantially the same position as the side surface 14a.

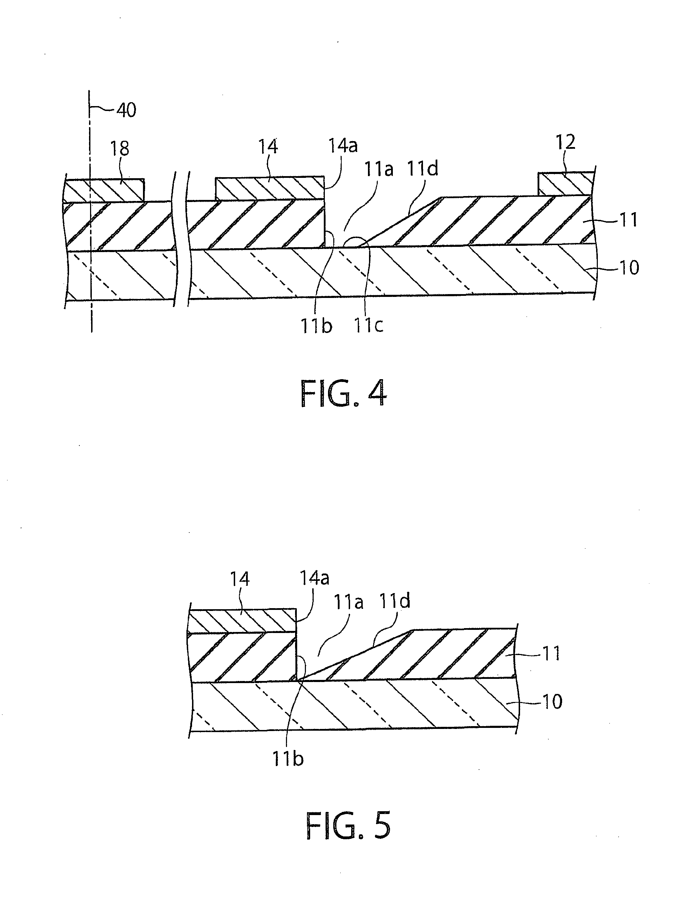

In FIG. 1, each groove 11a is illustrated as having a rectangular cross section. However, as shown in FIG. 4, each groove 11a can be in other shapes, such as a tapered shape. In such a case, each groove 11a is in a shape such that the side surface 11b and a bottom 11c are perpendicularly connected to each other, and the bottom 11c and a tapered portion 11d make a predetermined angle. By providing an angle that matches a desired refractive index distribution to the tapered shape of each groove 11a, it is possible to make a distribution close to the ideal distribution shown in FIG. 3. Furthermore, the shape of each groove 11a can be made such that no bottom 11c is provided and a tapered portion 11d and the side surface 11b make a predetermined angle as shown in FIG. 5. Although the side surface 11b is illustrated so as to be substantially perpendicular to the top surface of the substrate 10 in Fig. 5, it can be tilted from the perpendicular direction toward the top surface of the substrate 10.

It is not possible to control the portion of each groove 11a by applying a voltage. Accordingly, each groove 11a works even if no voltage is applied. Therefore, if the grooves 11a are made to be too large, when a two-dimensional image is to be displayed, the grooves 11a affect the two-dimensional image. However, from the anisotropic refractive index characteristic, generally the refractive index difference is not so great. Therefore, it is believed that if the depth of the grooves 11a is in a range from 1 µm to 5 µm, the influence of the groove 11a is small, and can be ignored. Furthermore, it is preferable that the depth of the grooves 11a is equal to or less than the thickness of the insulating layer 11. When a two-dimensional image is displayed, the influence of the groove 11a is small, and can be ignored, but when a three-dimensional image is displayed, the shape of the peak of a sharp Fresnel lens contributes the improvement of the lens characteristic.

As described above, according to this embodiment, it is possible to improve the lens characteristics by providing grooves near regions of the insulating layer immediately below the Fresnel electrodes. As a result, it is possible to obtain a liquid crystal optical element and an image display apparatus that can provide a high quality display.

While a certain embodiment has been described, the embodiment has been presented by way of example only, and is not intended to limit the scope of the invention. Indeed, the method and system described herein may be embodied in a variety of other forms without departing from the scope of the invention defined by the accompanying claims.

## Claims

1. A liquid crystal optical element (1) comprising:
a first substrate (10);
an insulating layer (11) provided onto a first surface of the first substrate (10);
a pair of first electrodes (12) being provided onto the insulating layer (11), both extending in a first direction (Y), and being arranged in a second direction (X) that is perpendicular to the first direction (Y);
a pair of second electrodes (14) being provided between the pair of first electrodes (12) on the first surface, both extending in the first direction (Y), and being arranged in the second direction (X);
a second substrate (20) having a second surface facing the first surface of the first substrate (10);
a counter electrode (22) provided onto the second surface of the second substrate (20); and
a liquid crystal layer (30) provided between the first substrate (10) and the second substrate (20),
**characterised in that** the insulating layer (11) has a groove (11a) respectively provided directly adjacent to each region of the insulating layer (11) immediately below one of the second electrodes (14), and each extending in the first direction (Y).

2. The liquid crystal optical element (1) according to claim 1, wherein:
a central axis (40) of the liquid crystal optical element (1) passes through a middle point of a line connecting centers in the second direction (X) of the first electrodes (12); and
a first side surface (11b) of each groove (11a), the first side surface (11b) being in parallel to the central axis (40) and being the side surface of the groove (11a) closest to the central axis (40), is aligned with the side surface (14a) of the corresponding second electrode (14) that is furthest away from the central axis (40) and the first side surface (11b) being parallel to the first direction (Y).

3. The liquid crystal optical element (1) according to claim 2, wherein each groove (11a) has a bottom (11c) and a second side surface (11d) that is along the first direction (Y) and furthest away from the central axis (40).

4. The liquid crystal optical element (1) according to claim 3, wherein the second side surface (11d) of each groove (11a) intersects the bottom (11c) in a manner to tilt relative to the bottom (11c).

5. The liquid crystal optical element (1) according to claim 2, wherein each groove (11a) has second side surface (11d) that is along the first direction (Y) and furthest away from the central axis (40), the second side surface (11d) intersecting the first side surface (11b).

6. The liquid crystal optical element (1) according to claim 2, wherein each groove (11a) has a rectangular cross section when sectioned along a plane perpendicular to the first direction (Y).

7. The liquid crystal optical element (1) according to any one of the preceding claims, wherein the depth of each groove (11a) is in a range from 1 µm to 5 µm.

8. An image display apparatus (100) comprising:
the liquid crystal optical element (1) according to any one of the preceding claims; and
an image display unit (80) on which the liquid crystal optical element (1) is stacked, for causing light containing image information to be incident onto the liquid crystal layer (30) to display the image.

## Patentansprüche

1. Optisches Flüssigkristallelement (1) mit:
einem ersten Substrat (10),
einer Isolierschicht (11), die auf einer ersten Oberfläche des ersten Substrats (10) vorgesehen ist,
einem Paar erster Elektroden (12), die auf der Isolierschicht (11) vorgesehen sind, die sich beide in einer ersten Richtung (Y) erstrecken, und die in einer zweiten Richtung (X) angeordnet sind, die senkrecht zur ersten Richtung (Y) ist,
einem Paar zweiter Elektroden (14), die zwischen dem Paar erster Elektroden (12) auf der ersten Oberfläche vorgesehen sind, die sich beide in der ersten Richtung (Y) erstrecken, und die in der zweiten Richtung (X) angeordnet sind,
einem zweiten Substrat (20) mit einer zweiten Oberfläche gegenüber der ersten Oberfläche des ersten Substrats (10),
einer Gegenelektrode (22), die auf der zweiten Oberfläche des zweiten Substrats (20) vorgesehen ist, und
einer Flüssigkristallschicht (30), die zwischen dem ersten Substrat (10) und dem zweiten Substrat (20) vorgesehen ist,
**dadurch gekennzeichnet, dass** die Isolierschicht (11) eine Nut (11a) aufweist, die jeweils direkt benachbart zu jedem Bereich der Isolierschicht (11) unmittelbar unterhalb einer der zweiten Elektroden (14) vorgesehen ist und die sich jeweils in der ersten Richtung (Y) erstreckt.

2. Optisches Flüssigkristallelement (1) nach Anspruch 1, bei dem
eine zentrale Achse (40) des optischen Flüssigkristallelements (1) durch einen mittleren Punkt einer Linie hindurchtritt, welche die Zentren in der zweiten Richtung (X) der ersten Elektroden (12) verbindet, und
eine erste Seitenoberfläche (160) jeder Nut (11a), wobei die erste Seitenoberfläche (116) parallel zur zentralen Achse (40) ist und sie die Seitenoberfläche der Nut (11a) ist, die am nächsten zu der zentralen Achse (40) ist, im Wesentlichen an der Seitenoberfläche (14a) der entsprechenden zweiten Elektrode (14) ausgerichtet ist, die am weitesten weg von der zentralen Achse (40) ist, und wobei die erste Seitenoberfläche (11b) parallel zur ersten Richtung (Y) ist.

3. Optisches Flüssigkristallelement (1) nach Anspruch 2,
bei dem jede Nut (11a) einen Boden (11c) und eine zweite Seitenoberfläche (11d) aufweist, die entlang der ersten Richtung (Y) ist und die am weitesten weg von der zentralen Achse (40) ist.

4. Optisches Flüssigkristallelement (1) nach Anspruch 3, bei dem die zweite Seitenoberfläche (11d) jeder Nut (11a) den Boden (11c) so schneidet, dass sie bezüglich des Bodens (11c) geneigt ist.

5. Optisches Flüssigkristallelement (1) nach Anspruch 2, bei dem jede Nut (11a) eine zweite Seitenoberfläche (11b) hat, die entlang der ersten Richtung (Y) und am weitesten weg von der zentralen Achse (40) ist, wobei die zweite Seitenoberfläche (11b) die erste Seitenoberfläche (11b) schneidet.

6. Optisches Flüssigkristallelement (1) nach Anspruch 2, bei dem jede Nut (11a) einen rechteckigen Querschnitt hat, wenn entlang einer Ebene senkrecht zur ersten Richtung (Y) geschnitten.

7. Optisches Flüssigkristallelement (1) nach einem der vorgehenden Ansprüche, bei dem die Tiefe jeder Nut (11a) in einem Bereich von 1µm bis 5µm liegt.

8. Bildanzeigevorrichtung (100) mit:
dem optischen Flüssigkristallelement (1) nach einem der vorhergehenden Ansprüchen und
einer Bildanzeigeeinheit (80), auf die das optische Flüssigkristallelement (1) gestapelt ist, um Licht, welches Bildinformationen enthält, dazu zu bringen, auf eine Flüssigkristallschicht (30) einzufallen, um das Bild anzuzeigen.

## Revendications

1. Elément optique à cristaux liquides (1) comprenant :
un premier substrat (10) ;
une couche isolante (11) prévue sur une première surface du premier substrat (10) ;
une paire de premières électrodes (12) étant prévue sur la couche isolante (11) s'étendant dans une première direction (Y), et étant agencée dans une seconde direction (X) qui est perpendiculaire à la première direction (Y) ;
une paire de secondes électrodes (14) étant prévue entre la paire de premières électrodes (12) sur la première surface, les deux s'étendant dans la première direction (Y) et étant agencée dans la seconde direction (X) ;
un second substrat (20) ayant une seconde surface faisant face à la première surface du premier substrat (10) ;
une électrode auxiliaire (22) prévue sur la seconde surface du second substrat (20) ; et
une couche de cristaux liquides (30) prévue entre le premier substrat (10) et le second substrat (20),
**caractérisé en ce que** la couche isolante (11) a une rainure (11a) respectivement prévue de manière directement adjacente à chaque région de la couche isolante (11) immédiatement au-dessous de l'une des secondes électrodes (14) et s'étendant chacune dans la première direction (Y).

2. Elément optique à cristaux liquides (1) selon la revendication 1, dans lequel :
un premier axe central (48) de l'élément optique à cristaux liquides (1) passe par un point central d'une ligne raccordant des centres dans la seconde direction (X) des premières électrodes (12) ; et
une première surface latérale (11b) de chaque rainure (11a), la première surface latérale (11b) étant parallèle à l'axe central (40) et étant la surface latérale de la rainure (11a) la plus proche de l'axe central (40), est alignée avec la surface latérale (14a) de la seconde électrode (14) correspondante qui est la plus éloignée de l'axe central (40) et la première surface latérale (11b) étant parallèle à la première direction (Y).

3. Elément optique à cristaux liquides (1) selon la revendication 2, dans lequel chaque rainure (11a) a un fond (11c) et une seconde surface latérale (11d) qui est le long de la première direction (Y) et la plus éloignée de l'axe central (40).

4. Elément optique à cristaux liquides (1) selon la revendication 3, dans lequel la seconde surface latérale (11d) de chaque rainure (11a) coupe le fond (11c) afin de s'incliner par rapport au fond (11c).

5. Elément optique à cristaux liquides (1) selon la revendication 2, dans lequel chaque rainure (11a) a une seconde surface latérale (11d) qui est le long de la première direction (Y) et la plus éloignée de l'axe central (40), la seconde surface latérale (11d) coupant la première surface latérale (11b) .

6. Elément optique à cristaux liquides (1) selon la revendication 2, dans lequel chaque rainure (11a) a une section transversale rectangulaire lorsqu'elle est coupée le long d'un plan perpendiculaire à la première direction (Y).

7. Elément optique à cristaux liquides (1) selon l'une quelconque des revendications précédentes, dans lequel la profondeur de chaque rainure (11a) est dans une plage de 1 µm à 5 µm.

8. Appareil d'affichage d'image (100) comprenant :
l'élément optique à cristaux liquides (1) selon l'une quelconque des revendications précédentes ; et
une unité d'affichage d'image (80) sur laquelle l'élément optique à cristaux liquides (1) est empilé, pour amener la lumière contenant l'information d'image à être incidente sur la couche de cristaux liquides (30) afin d'afficher l'image.
